# EUROPÄISCHE PATENTANMELDUNG

(11) **EP 4 371 639 A1**
(43) Veröffentlichungstag der Anmeldung: **22.05.2024**
(21) Anmeldenummer: 23209487.0
(22) Anmeldetag: 13.11.2023
(51) Int. Cl.: A63H 27/10, A63H 30/04, B64U 10/13, B64U 70/30

(54) **TRANSPORTABLE START- UND LANDEPLATTFORM FÜR MODELL-HELI- UND MULTIKOPTER**

(30) Priorität: 15.11.2022 DE 202022106418 U
(71) Anmelder: Lüthi, Alessandro, 6233 Büron (CH); Hofer, Philipp, 4663 Aarburg (CH)
(72) Erfinder: Lüthi, Alessandro, 6233 Büron (CH); Hofer, Philipp, 4663 Aarburg (CH)
(74) Vertreter: Gerschütz, Florian Matthias

(57) **Zusammenfassung**

Eine transportable Start- und Landeplattform für Modell-, Heli- und Multikopter besteht im Wesentlichen aus einem ausgespannten Netz, das an ausklappbaren Armen auf einem Stativ montiert ist.

## Beschreibung

### Hintergrund der Erfindung

Modellflugzeug-Drohnen und Heli- bzw. Multikopter sind beim Start, insbesondere aber bei der Landung, erheblichen Unfallrisiken ausgesetzt. Dies umso mehr, wenn kein ebener Start- und Landeplatz zur Verfügung steht.

Insbesondere in steinigem Gelände sind die Verluste durch Abkippen und Anschlagen der Propeller hoch.

### Aufgabe der Erfindung

Die Aufgabe vorliegender Erfindung ist daher, eine Start- und Landefläche zu schaffen, die beliebig aufgestellt und transportiert werden kann und die insbesondere auch in steinigem oder felsigem Gelände einsetzbar ist.

Durch die Möglichkeit die Plattform auf einem Standard-Stativ aufzustellen, kann die Drohne auch in staubiger, sandiger oder nasser Umgebung, sowie auch mit hoher Vegetation sicher gestartet und gelandet werden.

Weitere Anforderungen sind beste Transportfähigkeit mit geringem Gewicht, Unempfindlichkeit gegenüber Wind und anderen Wetterbedingungen sowie die Vermeidung des Bodeneffekts bei der Landung.

Ferner ist eine Aufgabe der Erfindung, die Sicherheit bei der Landung und insbesondere bei ungünstigen Wetterbedingungen, wie Nebel und Seitenwind, die Zielansprache für eine automatische Landung zu präzisieren.

Die Plattform ist mit einer Wasserwaage (Libelle) ausgestattet, welche das waagerechte Nivellieren erleichtert. Auf ebenem Untergrund, welcher an sich schädlich für die Drohne ist (z.B. Sand, Staub), kann diese auch ohne Stativ verwendet werden.

### Lösung und erfinderischer Schritt

Der entscheidende erfinderische Schritt ist hier, eine Start- und Landeplattform zu schaffen, die im Gegensatz zu bekannten Ausführungen auf einem Stativ montiert ist, das mit dem Dreibein-Unterbau auch in schwierigem Gelände so aufzubauen ist, dass sich die Plattform leicht waagrecht ausrichten lässt.

Das Ziel ist die Plattform in einem Rucksack oder Kameratasche mitzutragen.

### Ausführung

Die Ausführung erfolgt erfindungsgemäß mit einem auffaltbaren Tragenetz, das an drei oder mehr am Plattformsockel angelenkten und waagerecht ausklappbaren Armen ausgespannt werden kann und so die Start- und Landefläche bildet.

Dabei bewirkt die Netzstruktur, dass die Landefläche so durchbrochen ist, dass kein Bodeneffekt bei der Landung auftreten kann. Ferner ist durch das Stativ und die Klapparme, sowie das Netz, das Gewicht des Gerätes sehr gering, insbesondere wenn die für Stative übliche Leichtstruktur der Elemente genutzt wird.

Zudem ermöglicht der Aufbau, das Ganze klein zusammenzufalten, so dass die Start- und Landeplattform leicht zu tragen und neben einem Multikopter auch gut im Kofferraum von Fahrzeugen zu verstauen ist.

Um die Start- und Landeplattform an einem handelsüblichen Stativ anzubringen, verfügt dessen Plattformsockel über Gewindebohrungen für Stativgewinde nach DIN 4503-1 / ISO 1222.

### Beschreibung anhand der Zeichnung

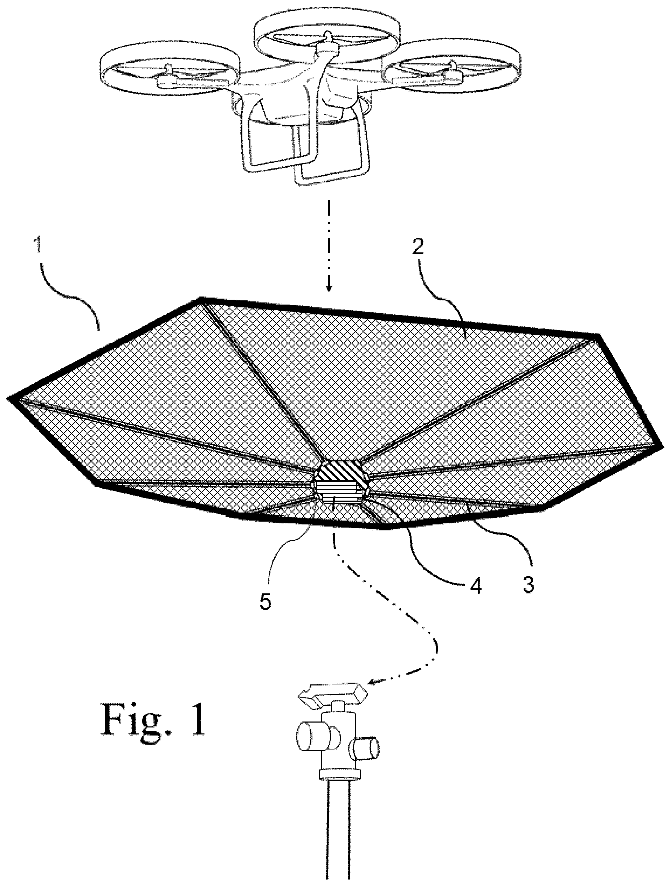

Fig. 1 zeigt die transportable Start- und Landeplattform (1), bestehend aus dem Tragenetz (2), den am Plattformsockel (5) mit Gelenken (3a) ausklappbaren Armen (3b) und dem Einschubadapter (4) für eine Stativplatte.

Zum Zwecke des besseren Verständnisses ist unter Fig. 1 ein Stativ (7) und über Fig. 1 eine Drohne (6) visualisiert.

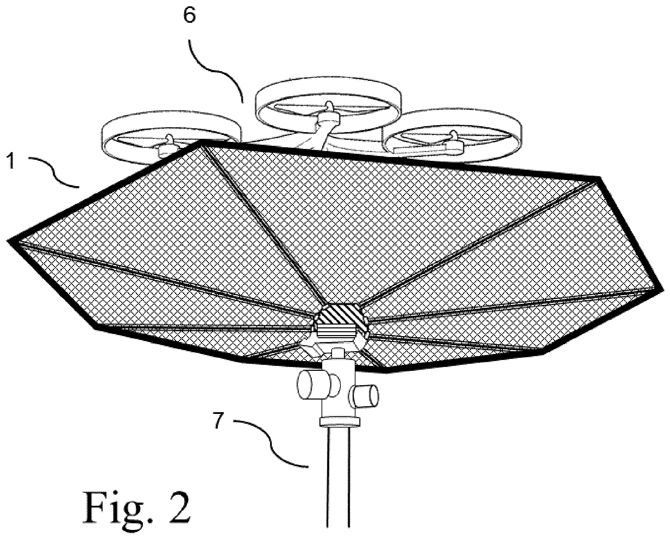

Fig. 2 zeigt die Anordnung in der Nutzung, bestehend aus transportabler Start- und Landeplattform (1), Stativ (7) und Drohne (6).

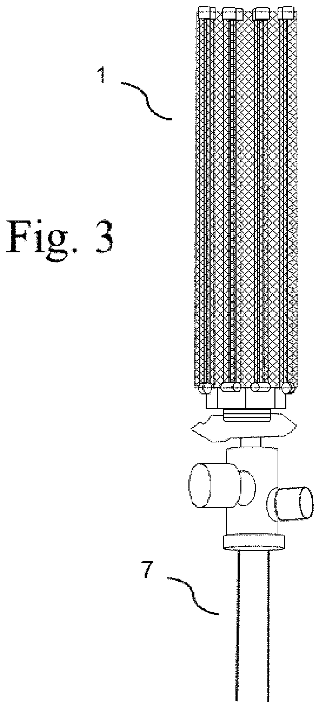

Fig. 3 zeigt die transportable Start- und Landeplattform (1) in zusammengeklapptem Zustand, montiert auf einem Stativ (7).

## Patentansprüche

1. Transportable Start- und Landeplattform für Modell-Heli- und Multikopter, **dadurch gekennzeichnet, dass** die Plattform aus einer Netzstruktur besteht, die über einem Stativ an ausklappbaren Armen ausgespannt und einfach nivellierbar ist.

2. Transportable Start- und Landeplattform für Modell-Heli- und Multikopter nach Anspruch 1, **dadurch gekennzeichnet, dass** die ausklappbaren Arme an Gelenken proximal zum Stativkopf an einem auf diesem montierten Plattformsockel angebracht sind.

3. Transportable Start- und Landeplattform für Modell-Heli- und Multikopter nach Anspruch 2, **dadurch gekennzeichnet, dass** die ausklappbaren Arme zusammengelegt und an ihren Spitzen zum Transport miteinander verbunden und so gesichert werden können.

4. Transportable Start- und Landeplattform für Modell-Heli- und Multikopter nach mindestens einem der Ansprüche 1 bis 3, **dadurch gekennzeichnet, dass** das Netz aus Wetter- und UV-resistentem Kunststoff besteht.

5. Transportable Start- und Landeplattform für Modell-Heli- und Multikopter nach mindestens einem der Ansprüche 1 bis 4, **dadurch gekennzeichnet, dass** der Plattformsockel als Funk-Signalbake ausgebildet ist, die die Endposition anfliegender Heli- oder Multikopter präzisiert.

6. Transportable Start- und Landeplattform für Modell-Heli- und Multikopter nach Anspruch 5, **dadurch gekennzeichnet, dass** die Bake als Referenzsignal zu Satelliten-Navigationsdaten dient.
